# EUROPEAN PATENT APPLICATION

(11) **EP 1 909 447 A1**
(43) Date of publication of application: **09.04.2008**
(21) Application number: 07253082.7
(22) Date of filing: 06.08.2007
(51) Int. Cl.: H04L 27/26

(54) **Peak-to-average power reduction technique**

(30) Priority: 03.10.2006 GB 0619492
(71) Applicant: Lucent Technologies Inc., Murray Hill, New Jersey 07974-0636 (US)
(72) Inventor: Obernosterer, Frank Gerhard Ernst, 90411 Nuremberg (DE); Bachl, Rainer Walter, 90425 Nuremberg (DE); Gunreben, Peter Christian, 91096 Moehrendorf (DE)
(74) Representative: Sarup, David Alexander

(57) **Abstract**

A technique for reducing peak-to-average power ratio in a composite signal includes an M-algorithm approach. A plurality of rotation factors are selected. At least some of the plurality of sub-carriers of the composite signal are modified using at least one of the rotation factors for each modified sub-carrier. The M-algorithm approach allows for determining which of the rotation factors to use for modifying each of the modified sub-carriers.

## Description

### 1. Field of the Invention

This invention generally relates to communications.

### 2. Description of the Related Art

Multi-carrier transmission is often used in wireline and wireless communication applications, for example with discrete multi-tone transmission (DMT) or digital subscriber line (DSL) techniques and orthogonal frequency division multiplexing (OFDM) for wireless communications such as WLAN, WiMAX, DVB or the forthcoming E-UTRA standards. A major drawback of multi-carrier transmissions is the high peak-to-average power ratio (PAPR) of the transmit signal. A high PAPR requires a large power amplifier back off from maximum power so that the operation of the power amplifier remains approximately linear. This, in turn, reduces the average transmit power and the power efficiency of a particular power amplifier. Additionally, introducing a higher powered amplifier requires additional expense, which is not desirable.

Several techniques have been suggested to reduce PAPR. Examples include partial transmit sequences (PTS), clipping, adaptive constellation extension, tone injection and tone reservation. Several of these have disadvantages. Clipping causes in-band and out-of-band distortion. Adaptive constellation extension and tone injection cause the transmit power to vary and requires specific receiver designs. Tone reservation and PTS reduce the capacity or data rate of the transmission system.

Despite such disadvantages, some power control technique is desirable. Among the techniques mentioned above, PTS seems to be particularly advantageous because it does not introduce any errors in the in-band transmit signal, it causes no out-of-band emissions and it does not increase or decrease the output power of the transmit signal. As known, PTS applies one rotation factor to N non-overlapping sub-vectors, respectively. Every sub-vector is characterized by multiplication with one rotation factor per OFDM symbol. The rotation factors are usually chosen from a discrete set of rotation factors at the unit circle (e.g., {1, j, -1, -j}) such that transmit energy is preserved.

Ideally, PTS techniques minimize PAPR. The challenge is in determining how to apply specific rotation factors to particular sub-vectors or sub-carriers. The level of computation required for determining the optimum rotation factors to minimize PAPR is highly complex and often not feasible in a practical system. For example, when there are four possible rotation factors and ten users or sub-vectors in a composite signal, the computation required becomes overly burdensome because there is a very high number of possible combinations of rotation factors. It is impractical to check the maxima of the composite signal for all possible permutations under such circumstances.

There is a need for a technique for applying PTS to realize a reduced PAPR while avoiding the computation complexity associated with attempting to determine the optimum solution. Various sub-optimum computation approaches have been suggested. For example, Tellambura C., "Improved phase factor computation for the PAR reduction of an OFDM signal using PTS", IEEE Comms. Letters, vol.5, no.4, pp.135-137, April 2001, discusses an approximation of the continuous location factors using gradient search techniques following by a quantization of the rotation factors. Tellambura C., "Phase optimization criterion for reducing peak-to-average power ratio in OFDM", Electronics Letters, vol.43, no.2, pp.169-170, 1998, includes techniques based on autocorrelation of IFFT input signals. Jayalath A.D.S, Tellambura C., "Adaptive PTS approach for reduction of peak-to-average power ratio of OFDM signal", Electronics Letters, vol.36, no.14, pp.1226-1228, July 2000, includes search techniques with a stopping criterion for the search when a certain target PAPR is achieved or the maximum amount of computation is exceeded. Other techniques are suggested in Cimini L.J.Jr., Sollenberger N.R., "Peak-to-average power ratio reduction of an OFDM signal using partial transmit sequences", IEEE Comms. Letter, vol.4, no.3, pp.86-88, March 2000 and Han S.H., Lee J.H, "PAPR reduction of OFDM signals using a reduced complexity PTS technique", IEEE Signal Proc. Letters, vol. 11, no. 11, pp.887-890, Nov. 2004.

Each of these techniques only provides a sub-optimum solution. Unfortunately, they each include a very high computational complexity. With such techniques, a flexible tradeoff between performance and computational complexity may not be possible.

### SUMMARY

An exemplary method of peak-to-average power ratio (PAPR) reduction for a composite communication signal including a plurality of sub-carriers includes selecting a plurality of rotation factors. At least some of the plurality of sub-carriers are modified using at least one of the rotation factors for each modified sub-carrier. The determination of which of the rotation factors to use for modifying each of the modified sub-carriers is based on a M-algorithm approach.

The reader is now referred to the appended claims.

The various features and advantages of this invention will become apparent to those skilled in the art from the following detailed description. The drawings that accompany the detailed description can be briefly described as follows.

### BRIEF DESCRIPTION OF THE DRAWINGS

Figure 1 schematically illustrates partial transmit sequence operation for an OFDM transmitter.

Figure 2 schematically illustrates an example M-algorithm approach for reducing PAPR.

Figure 3 schematically illustrates a later stage of the M-algorithm approach according to one example.

### DETAILED DESCRIPTION

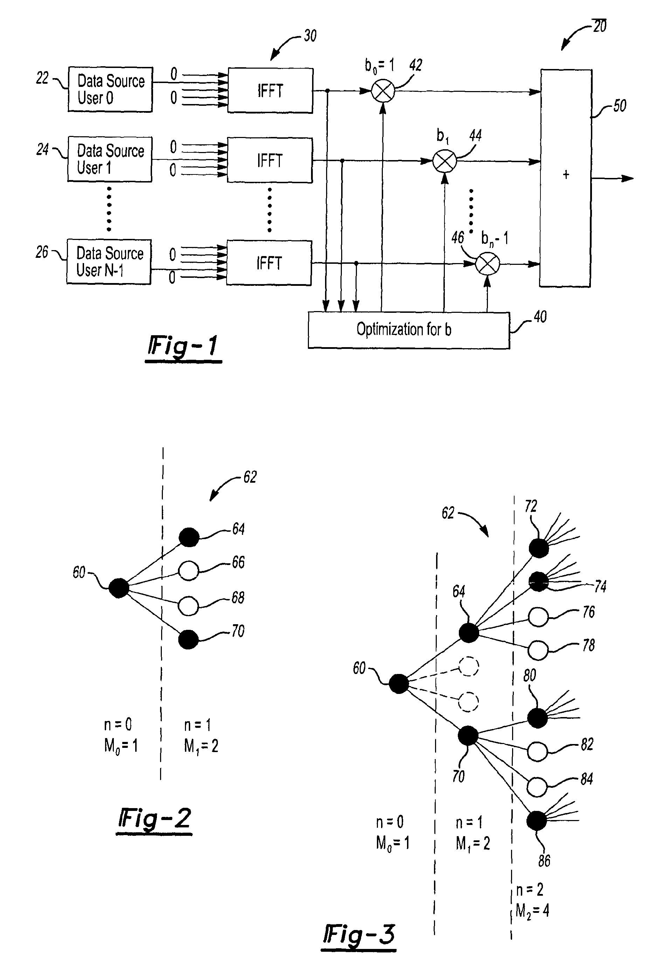

Figure 1 schematically shows a partial transmit sequence (PST) arrangement 20. A plurality of data sources 22, 24 and 26 are each included in a composite signal. The data sources 22-26 can be regarded as users. Each user has at least one assigned sub-carrier (e.g., a sub-vector). This description refers to the users, the data sources and the sub-carriers interchangeably for discussion purposes.

Inverse fast fourier transform (IFFT) operations are schematically shown at 30 for processing the signals in a known manner.

At least some of the sub-carriers are modified by applying a rotation factor. In the illustrated example, a modification module 40 determines what rotation factor should be used for each modified sub-carrier. The illustrated example includes multiplying the signal of a sub-carrier by a corresponding rotation factor as schematically shown at 42, 44 and 46. A resulting composite signal is established at 50 for transmission.

In one example, the sub-carriers are non-overlapping and the rotation factors are useful for causing a phase rotation. Example rotation factors include {1, - 1, j, -j}. The rotation factors in one example are selected on a unit circle to avoid changing the output power of the transmitted signal.

The task of deciding which rotation factor to use for each sub-carrier includes an M-algorithm approach. The M-algorithm is known but has not been used in the context of reducing PAPR. In this example, an M-algorithm approach is used for determining which rotation factor to apply to a sub-carrier for reducing PAPR. The disclosed example is particularly useful for PAPR reduction of OFDM signals with partial transmit sequences.

In one example, a plurality of rotation factors that are potentially useful are preselected. In one example, four rotation factors are selected as candidates for potentially modifying a sub-carrier for reducing PAPR. For any given composite signal, the task is to select an appropriate rotation factor for a particular sub-carrier and a combination of them to realize the composite signal while reducing PAPR.

One example includes determining the contribution of each sub-carrier to the peak amplitude of the composite signal. The sub-carriers are ordered in a descending order according to their expected contribution to the peak (e.g., according to their power).

The M-algorithm approach is applied to adjust the vector of rotation factors (e.g., complex phase factors) b=[b₀, b₁, ... b_{N-1}] with bᵥ=exp (j_{θ}) such that the PAPR of the composite time domain signal (e.g., after combination of all partial transmit sequences) is as small as possible. In one example, the users occupy different sub-carriers that are orthogonal in the frequency domain so that a pure phase rotation of the partial sequences does not change the average power of the composite signal in the time domain.

Assuming a set of Q available rotation factors to choose from per user n (where n = 0, 1, ... N-1), the total number of different possibilities for the vector b is Q^{N-1} (given that b₀ is fixed in advance). For discussion purposes, we will consider an arrangement where Q equals four available rotation factors.

The M-algorithm approach in this example significantly reduces the search space of all possible permutations of the elements of the vector b.

Having sorted the user signal contributions (e.g., sub-carriers) according to their total power, a partial composite signal is set initially including the signal of the user having the highest power (e.g., the greatest contribution to the peak amplitude). In one example, b₀ = 1 is an initial value of the partial composite signal. The term "partial composite signal" as used in this description denotes a time domain signal that only consists of a subset of all user contributions to the composite signal.

Referring to Figure 2, the partial composite signal has an initial value established by the signal of the strongest user as shown at 60. At 62, the partial composite signal is established based upon an iteration of the M-algorithm approach. At this stage, all possible Q partial composite signals are determined by adding the signal of the second strongest user (n=1) rotated by each of available rotation factors. For example, one of the four available rotation factors and the two strongest sub-carriers results in a partial composite signal illustrated at 64. Each of the other available rotation factors and the two strongest sub-carriers results in a partial composite signal as shown at 66, 68 and 70, respectively.

In this example, a sub-set of the available rotation factors are selected for being potentially used to modify the sub-carrier of the second strongest user. In this example, the rotation factors that provide a partial composite signal with a resulting PAPR that is lower than other resulting PAPRs associated with the other rotation factors are kept in the subset of rotation factors for the second strongest user. In the illustrated example, the resulting PAPR associated with the rotation factors providing the partial composite signals schematically illustrated at 64 and 70 are lower than the resulting PAPR associated with the rotation factors that provide the partial composite signals schematically shown at 66 and 68. Accordingly, the rotation factors associated with the results shown at 64 and 70 are selected as the subset of rotation factors for the second strongest user n=1 (e.g., b₁=64, 70)

In the illustrated example, M rotation factors are selected for the subset. In this example, M₁ = 2 (e.g., two rotation factors are kept in the subset).

Determining which of the rotation factors to select for the subset in one example includes determining the maximum of the absolute values of all Q resulting partial composite signals for each user and each rotation factor including a consideration of any users that have already been considered. The absolute values are then arranged in ascending order and the first M entries of the list, which reflect the smallest computed peak values are kept as the selected subset of rotation factors. All others are discarded.

Referring to Figure 3, the next strongest user (e.g., n=2) is considered in view of the contribution of the strongest user shown at 60 and the contribution of the second strongest user shown at each of 64 and 70, which correspond to respective rotation factors from the selected subset. In this example, eight partial composite signals are determined by applying the four rotation factors to the sub-carrier of the user n=2 providing results schematically shown at 72, 74, 76, 78, 80, 82, 84 and 86, respectively. In this example, there are M₁Q partial composite signals based on the existing list entries for b₀, b₁. The maximum of the absolute values of each of the composite signals is determined and they are arranged in assembly order.

In Figure 3, M₂ = 4 because two of the rotation factors are selected for the subset in association with each of the two rotation factors of the subset b₁ for the second strongest user n=1. In this example, the rotation factors associated with the composite signal values schematically shown at 72, 74, 80 and 86 are included in the subset of rotation factors for the user n=2 (e.g., b₂=72, 74, 80, 86).

This process continues until all users are considered. At each iteration of the M-algorithm approach, an additional user is taken into account for determining which rotation factors will minimize each user's contribution to the partial composite signal.

The M-algorithm approach of this example differs from the traditional M-algorithm in that the metrics of the surviving braches are not accumulated from stage to stage. Instead, the metric for each branch is computed from scratch at each stage. In other words, the metrics at stage n are independent of the metrics at the previous stage n-1 so that the information that is passed from stage to stage is dependent only on the surviving branches themselves but not on their previous metrics.

The disclosed example provides significant flexibility that allows for determining a desired tradeoff between computational complexity and performance (e.g., the amount of PAPR reduction) by adjusting the M factors (e.g., how many rotation factors are kept for each sub-carrier's subset of rotation factors) and the number of iterations of the M-algorithm approach. For example, a single iteration of the M-algorithm approach may provide a first level of PAPR reduction. Several further iterations of the M-algorithm approach may further reduce the PAPR. Accordingly, deciding how many iterations allows for choosing a level of complexity on the one hand and a level of performance on the other hand.

Additional flexibility is possible in that for each stage n=0, 1, ... N-1, the number of surviving branches Mₙ (e.g., the number of rotation factors selected for a subset for a particular sub-carrier) can be adjusted individually. The selection of each Mₙ, which can be referred to by the M-algorithm steering vector M=[1, M₁, M₂, ... M_{N-1}] has a direct impact on the complexity of computation and the performance of the M-algorithm approach. Keeping more than one of the available rotation factors in the selected subset for any particular sub-carrier allows for an increased likelihood of finding the lowest possible resulting PAPR of the composite signal.

The disclosed example provides a relatively low complexity computation approach that can provide a close-to-optimum solution for PAPR reduction. The disclosed example also provides a large cost savings with regard to the power amplifier of a transmitter. The disclosed example provides a practical way of implementing a PAPR reduction technique resulting in lower PAPR such that a lower power amplifier back off is required. This allows for less expensive power amplifiers to be used and increases the power efficiency of the power amplifier.

## Claims

1. A method of peak-to-average-power (PAPR) reduction for a composite communication signal including a plurality of sub-carriers, comprising the steps of:
selecting a plurality of rotation factors;
modifying at least some of the plurality of sub-carriers using at least one of the rotation factors for each modified sub-carrier; and
**characterized by**
determining which of the rotation factors to use for modifying each of the modified sub-carriers based on a M-algorithm approach.

2. The method of claim 1, wherein the M-algorithm approach includes
determining a resulting PAPR associated with a selected subset of the plurality of rotation factors applied to each of the sub-carriers, respectively; and
determining a combination of the rotation factors from the selected subsets associated with a lowest resulting PAPR.

3. The method of claim 2, comprising
determining the selected subset of the plurality of rotation factors for each of the sub-carriers by
applying each of the plurality of rotation factors to each subcarrier,
determining a resulting PAPR associated with each of the rotation factors, and
selecting a determined number of rotation factors from the plurality of rotation factors having an associated resulting PAPR that is lower than a resulting PAPR associated with others of the rotation factors.

4. The method of claims 2 or 3, comprising
determining the selected subset for one of the sub-carriers; and
determining the selected subset for another one of the sub-carriers dependent on the selected subset for the one of the sub-carriers.

5. The method of claim 4, comprising
iteratively determining the selected subset for further ones of the sub-carriers dependent on previously selected subsets.

6. The method of any of the preceding claims, comprising
determining an expected contribution of each of the sub-carriers to the PAPR;
determining an order of the sub-carriers from a greatest expected contribution to the PAPR to a smallest expected contribution to the PAPR; and
applying the M-algorithm approach in the determined order of sub-carriers.

7. The method of claim 6, wherein the M-algorithm approach comprises
establishing a partial composite signal including first and second sub-carriers having the greatest and second-greatest expected contribution to the PAPR, respectively;
applying each of the rotation factors to the second sub-carrier;
determining a resulting PAPR of the partial composite signal resulting from each of the applied rotation factors; and
selecting a first subset of the applied rotation factors that have an associated resulting PAPR that is lower than a resulting PAPR associated with others of the applied rotation factors.

8. The method of claim 7, comprising
applying each of the rotation factors to a next one of the sub-carriers in the determined order in combination with each of the first subset of rotation factors respectively applied to the second sub-carrier;
determining a resulting PAPR of the partial composite signal resulting from each combination of applied rotation factors; and
selecting a next subset of the applied rotation factors for the next one of the sub-carriers that have an associated resulting PAPR that is lower than a resulting PAPR associated with others of the applied rotation factors.

9. The method of claim 8, comprising
applying each of the rotation factors to another next one of the sub-carriers in the determined order in combination with each of the first subset of rotation factors respectively applied to the first sub-carrier and each of the next subset of rotation factors respectively applied to the next one of the sub-carriers;
determining a resulting PAPR associated with each combination of applied rotation factors; and
selecting another next subset of the applied rotation factors for the another next one of the sub-carriers that have an associated resulting PAPR that is lower than a resulting PAPR associated with others of the applied rotation factors.

10. The method of claim 9, comprising
repeating the applying, determining and selecting steps for all of the sub-carriers in the determined order; and
determining a rotation factor for each of the sub-carriers from a corresponding subset of rotation factors that provides a combination of rotation factors resulting in a lowest PAPR.
